# EUROPEAN PATENT APPLICATION

(11) **EP 4 360 737 A1**
(43) Date of publication of application: **01.05.2024**
(21) Application number: 22203216.1
(22) Date of filing: 24.10.2022
(51) Int. Cl.: B01D 53/04, B01D 53/26, H01M 10/52

(54) **BATTERY AIR DRYER, CARTRIDGE, AND ELECTRIC VEHICLE BATTERY**

(71) Applicant: MANN+HUMMEL GmbH, 71636 Ludwigsburg (DE)
(72) Inventor: RAJAGOPAL, Nandakumar, Bengaluru (IN); PATNASETTY, Vivek, Bengaluru (IN); PAUL KALLUMGAL, Paul, Bengaluru (IN); LINHART, Jochen, Schwaikheim (DE); KARUPPANAN SINGARAM, Vijaykumar, Bengaluru (IN)
(74) Representative: Mann + Hummel Intellectual Property

(57) **Abstract**

A battery air dryer for drying air within a battery housing of an electric vehicle battery includes a dryer housing couplable to the battery housing, and including an installation opening and an open interior; a cartridge removably insertable through the installation opening into the open interior, and including a desiccant material configured to dry the air within the battery housing, the cartridge further including a first component of a keying device, and a seal cap axially moveably disposed in the open interior, and configured to be in a first state in which the seal cap is located adjacent to the installation opening, and allow a gas exchange between the open interior and an environment in a second state in which the seal cap is located remote from the installation opening.

## Description

### Technical Field

Embodiments relate to a battery air dryer, a cartridge for use in the battery air dryer, and an electric vehicle battery including the battery air dryer.

### Background Art

When moisture in the air in a battery housing of an electric vehicle battery condenses, the electric vehicle battery can become damaged by corrosion and can short-circuit. To avoid such damage, the air within the battery housing can be dried with a battery air dryer. The battery air dryer can be mounted inside the battery housing at manufacturing.

It is desired to insert a correct cartridge including a dryer material for drying the air within the battery housing, inside a housing of the battery air dryer. This can ensure the correct functioning of the battery air dryer and/or avoid damaging the battery air dryer and/or the electric vehicle battery.

In view of the above, it is one object of the embodiments to provide an improved battery air dryer. Further objects are the provision of an improved cartridge for user in the battery air dryer, and the provision of an improved electric vehicle battery including the battery air dryer.

### Summary

According to the embodiments, a battery air dryer for drying air within a battery housing of an electric vehicle battery includes a dryer housing couplable to the battery housing, and including an installation opening and an open interior, a cartridge removably insertable through the installation opening into the open interior, and including a desiccant material configured to dry the air within the battery housing, the cartridge further including a first component of a keying device, and a seal cap axially moveably disposed in the open interior, and configured to be in a first state in which the seal cap is located adjacent to the installation opening, and allow a gas exchange between the open interior and an environment in a second state in which the seal cap is located remote from the installation opening. The seal cap includes a second component of the keying device, the second component being configured to lock the seal cap in the first state, and the seal cap is only transferable from the first state to the second state when the second component is matchingly coupled to the first component.

The first component of the keying device that is included in the cartridge may include one or more keys extending in an axial direction from an end of the cartridge, and the second component of the keying device that is included in the seal cap may include one or more slots respectively into which the one or more keys are removably insertable.

The one or more keys may include a plurality of keys respectively having different shapes, the one or more slots may include a plurality of slots respectively having different shapes, and the different shapes of the plurality of keys may respectively fit into only the different shapes of the plurality of slots.

The battery air dryer may further include a cover disposed on an end of the dryer housing that is opposite to the installation opening included in the dryer housing. The second component of the keying device that is included in the seal cap may further include a lock ring interposed between the cover and the seal cap, the lock ring being axially moveably disposed in the open interior included in the dryer housing. The dryer housing may further include one or more recesses, and the lock ring may be configured to lock the seal cap to the one or more recesses in the first state in which the seal cap is located adjacent to the installation opening, and unlock the seal cap from the one or more recesses in the second state in which the seal cap is located remote from the installation opening.

The battery air dryer may further include a spring interposed between the cover and the lock ring, and configured to apply a force to the seal cap so that the seal cap is in the first state in which the seal cap is located adjacent to the installation opening, when the cartridge is uninstalled in the dryer housing, and compress so that the seal cap is in the second state in which the seal cap is located remote from the installation opening, when the cartridge is installed in the dryer housing.

The cartridge may further include a fixation element 52 disposed adjacent to an end of the cartridge 5, and the dryer housing may further include a fixation portion removably fixable to the fixation element.

The seal cap, the lock ring, and the spring may be rotatable in the open interior included in the dryer housing as the fixation element included in the cartridge is being fixed to the fixation portion included in the dryer housing.

A first portion of the dryer housing may be disposed above a surface of the battery housing, the first portion including the fixation portion, and a second portion of the dryer housing may be disposed below the surface of the battery housing.

The battery air dryer may further include an O-ring interposed between the battery housing and an extension portion extending from each of side surfaces of the dryer housing, the O-ring being configured to seal an interface between the battery housing and the extension portion.

The battery air dryer may further include a transparent lid disposed on an end of the cartridge.

The seal cap may be further configured to seal the open interior against the environment in the first state in which the seal cap is located adjacent to the installation opening.

An electric vehicle battery may include the battery housing, and the battery air dryer.

According to embodiments, a cartridge for use in a battery air dryer within a battery housing of an electric vehicle battery includes a desiccant material configured to dry the air within the battery housing, and a first component of a keying device. The cartridge is removably insertable through an installation opening into an open interior included in a dryer housing couplable to the battery housing. The battery air dryer includes a seal cap axially moveably disposed in the open interior, and configured to be in a first state in which the seal cap is located adjacent to the installation opening, and allow a gas exchange between the open interior and the environment in a second state in which the seal cap is located remote from the installation opening. The seal cap includes a second component of the keying device, the second component being configured to lock the seal cap in the first state. The seal cap is only transferable from the first state to the second state when the second component is matchingly coupled to the first component.

The features described above and below in conjunction with the battery air dryer according to the embodiments also apply to the cartridge according to the embodiments and to the electric vehicle battery according to the embodiments.

Further possible implementations or alternative solutions of the battery air dryer, the cartridge, and the electric vehicle battery also encompass combinations - that are not explicitly mentioned herein - of features described above or below with regard to the embodiments. The person skilled in the art may also add individual or isolated aspects and features to the most basic form of the embodiments.

### Brief Description of Drawings

Further embodiments, features and advantages of the battery air dryer, the cartridge, and the electric vehicle battery will become apparent from the subsequent description and dependent claims, taken in conjunction with the accompanying drawings, in which:
FIG. 1 shows an example of an electric vehicle;
FIG. 2 shows an exploded perspective view of a battery air dryer, according to embodiments;
FIG. 3A shows a perspective view of an electric vehicle battery, in which a cartridge is not yet installed in a dryer housing of the battery air dryer of FIG. 2;
FIG. 3B shows a zoomed-in perspective view of a region A of the battery air dryer of FIG. 3A;
FIG. 4A shows a perspective view of the electric vehicle battery, in which the cartridge is starting to be installed in the dryer housing of the battery air dryer of FIG. 2;
FIG. 4B shows a zoomed-in perspective view of a region B of the battery air dryer of FIG. 4A;
FIG. 4C shows a side view of the battery air dryer of FIG. 4A; and
FIG. 5 shows a perspective view of the electric vehicle battery, in which the cartridge is installed in the dryer housing of the battery air dryer of FIG. 2.

In the figures, like reference numerals designate like or functionally equivalent elements, unless otherwise indicated.

### Detailed Description

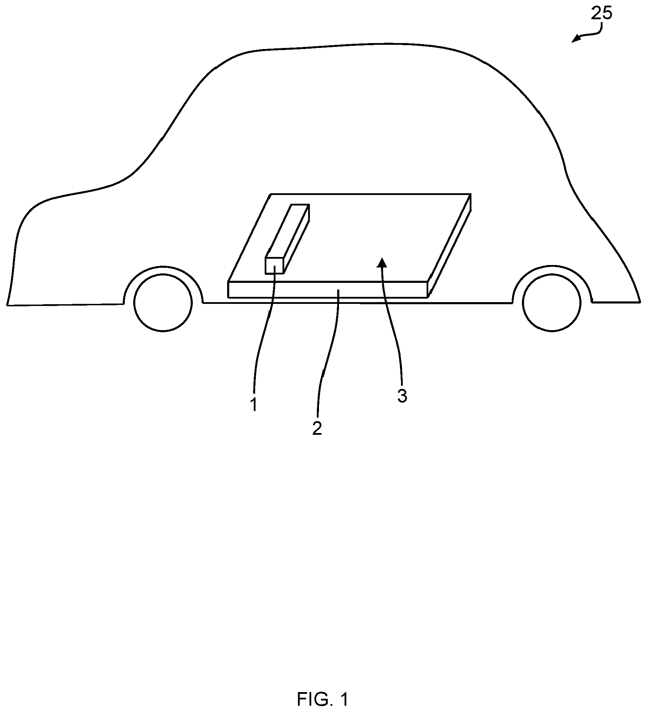

FIG. 1 shows an example of an electric vehicle 25. The electric vehicle 25 is an electric car, which is powered by an electric vehicle battery 3, also called "battery 3" in the following. The battery 3 can be arranged at the bottom of the electric car 25. It includes battery components such as battery cells and the like (not shown) arranged within a battery housing 2.

The battery housing 2 can have a flat and substantially cuboid shape. The battery housing 2 can be about 1.5m long, 0.8m large and 0.1m high. The housing 2 is not hermetically sealed such that air can flow between an inside of the housing 2 and an outside of the housing 2. This air flow allows a pressure equalization between inside and outside the battery housing 2, thereby reducing an explosion risk of the battery housing 2. In particular, about 30L of free air can be present in the battery housing 2 at any time.

When the temperature of the battery 3 drops, for example due to weather conditions, the humidity of the air can condensate and form water within the battery housing 2. The formation of water within the battery housing 2 is undesirable because it can damage the components of the battery 3, for example by corrosion and/or by causing a short-circuit.

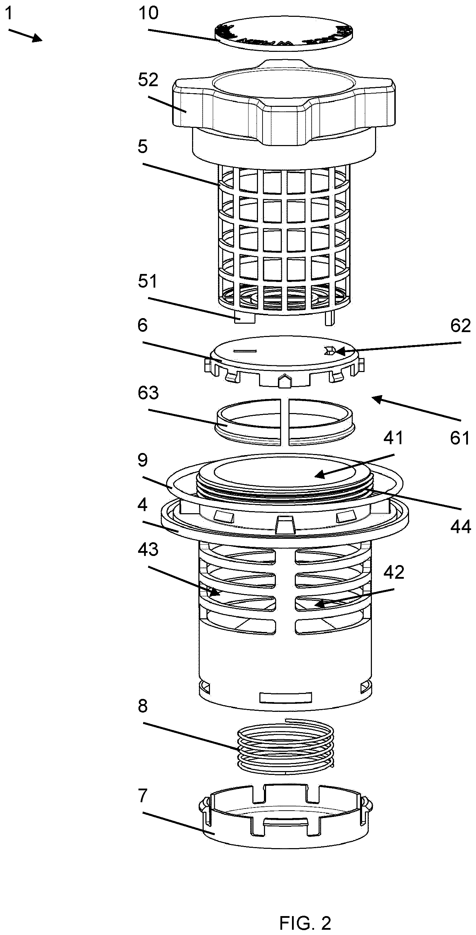

A battery air dryer 1 is provided within the battery housing 2 to dry the air inside the battery housing 2 and thereby avoid its condensation into water. The battery air dryer 1 will be described in view of FIGS. 2 to 5 in the following.

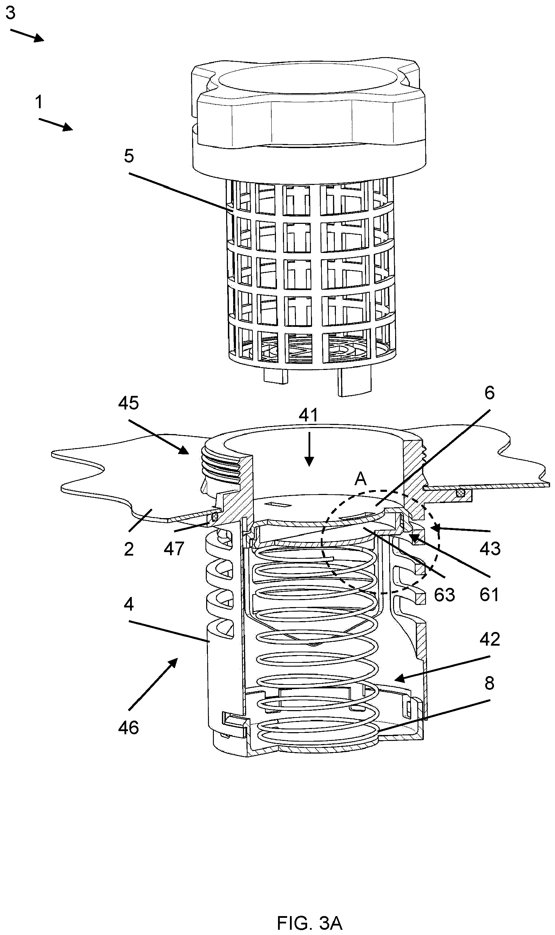

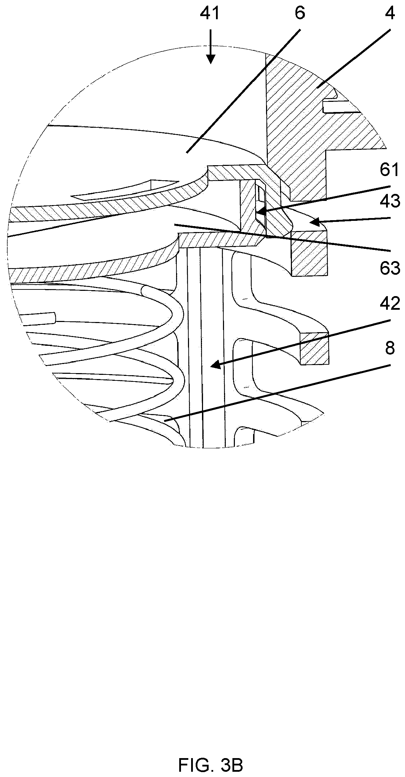

FIG. 2 shows an exploded perspective view of the battery air dryer 1, according to embodiments. FIG. 3A shows a perspective view of the electric vehicle battery 3, in which the cartridge 5 is not yet installed in the dryer housing 4 of the battery air dryer 1 of FIG. 2. FIG. 3B shows a zoomed-in perspective view of a region A of the battery air dryer 1 of FIG. 3A.

Referring to FIG. 2, the battery air dryer 1 includes a dryer housing 4, a cartridge 5, a seal cap 6, a cover 7, a spring 8, an O-ring 9, and a transparent lid 10.

Referring to FIG. 3A, the dryer housing 4 is couplable to the battery housing 2. For example, the battery housing 2 and the dryer housing 4 may be welded, snapped, rivetted or glued together at an extension portion 47 extending from each of side surfaces of the dryer housing 4. A first portion 45 of the dryer housing 4 is disposed above a surface of the battery housing 2, and a second portion 46 of the dryer housing 4 is disposed below the surface of the battery housing 2.

Referring again to FIG. 2, the dryer housing 4 may be made of single-molded plastic having a tube shape. The dryer housing 4 includes an installation opening 41 through a top surface of the dryer housing 4, and an open interior 42 between the top surface and a bottom surface of the dryer housing 4. Also, the dryer housing 4 includes recesses 43 respectively along and through each of the side surfaces of the dryer housing 4, forming a ribs-like structure. The dryer housing 4 further includes a fixation portion 44 adjacent the top surface of the dryer housing 4 and included in the first portion 45 of the dryer housing 4. For example, the fixation portion 44 may include threading.

The cartridge 5 is replaceable and removably insertable through the installation opening 41 into the open interior 42 of the dryer housing 4, by having a tube shape with a diameter smaller than that of the tube shape of the dryer housing 4. The dryer housing 4 may be made of an overmolded or connected plastic mesh in the form of a cage-like container holding a desiccant material (not shown) configured to dry the air within the battery housing 2. For example, the desiccant material may be silica gel. The cartridge 5 includes a first component 51 of a keying device. In embodiments, the first component 51 may include one or more keys 51 extending in an axial direction from an end or a bottom surface of the cartridge 5. If the one or more keys 51 includes a plurality of keys 51, then the plurality of keys 51 may have different shapes. Also, the cartridge 5 includes a fixation element 52 disposed adjacent to another end or a top surface of the cartridge 5. The fixation element 52 is removably fixable to the fixation portion 44 of the dryer housing 4. In an example, the fixation element 52 may include threading screwable onto that of the fixation portion 44, and include extensions respectively extending from side surfaces of the fixation element 52 and configured to allow a user to rotate the cartridge 5 for screwing the fixation element 52 onto the fixation portion 44.

The seal cap 6 is axially moveably disposed in the open interior 42 of the dryer housing 4. The seal cap 6 may be made of single-molded plastic having a circular disc shape. The seal cap 6 includes a second component 61 of the keying device. In embodiments, the second component 61 may include one or more slots 62 respectively into which the one or more keys 51 are removably insertable. If the one or more slots 62 includes a plurality of slots 62, then the plurality of slots 62 may have different shapes. The different shapes of the plurality of keys 51 respectively may fit into only the different shapes of the plurality of slots 62, thereby advantageously ensuring that only the correct cartridge 5 is inserted into and installed in the dryer housing 4.

The cover 7 is disposed on an end or the bottom surface of the dryer housing 4 that is opposite to the installation opening 41 of the dryer housing 4. The cover 7 may be made of single-molded plastic having a circular disc shape.

The second component 61 of the keying device further includes a lock ring 63 interposed between the cover 7 and the seal cap 6 and axially moveably disposed in the open interior 42 of the dryer housing 4. The lock ring 63 may be made of plastic having a circular disc shape, and may be split into a plurality of portions respectively corresponding to the plurality of keys 51 and the plurality of slots 62.

The spring 8 is interposed between the cover 7 and the lock ring 63. The spring 8 may be made of metal.

Referring again to FIG. 3A, the O-ring 9 is interposed between battery housing 2 and the extension portion 47 of the dryer housing 4. The O-ring 9 may be made of rubber. The O-ring 9 is configured to seal an interface between the battery housing 2 and the extension portion 47. In embodiments, the O-ring 9 may be replaced by any other kind of sealing.

Referring again to FIG. 2, the transparent lid 10 is disposed on the other end or the top surface of the cartridge 5. The transparent lid 10 may be made of glass or transparent plastic having a circular disc shape, so that a user can see an amount of desiccant material remaining in the cartridge 5, through the transparent lid 10.

Referring to FIGS. 3A and 3B, the seal cap 6 is configured to seal the open interior 42 against an environment in a first state in which the seal cap 6 is located adjacent to the installation opening 41 of the dryer housing 4. The second component 61 of the keying device is configured to lock the seal cap 6 in the first state. In detail, the lock ring 63 of the second component 61 is configured to lock the seal cap 6 to one of the recesses 43 in the first state. The spring 8 is configured to apply a force to a bottom surface of the lock ring 63, so that the lock ring 63 applies a force to a bottom surface of the seal cap 6 and the seal cap 6 is in the first state, when the cartridge 5 is uninstalled in the dryer housing 4. Therefore, when the cartridge 5 is uninstalled in the dryer housing 4, the seal cap 6 advantageously seals the dryer housing 4 and the battery housing 2 from water and contaminants entering therein and from an exchange of air between an inner side of the electric vehicle battery 3 and the environment.

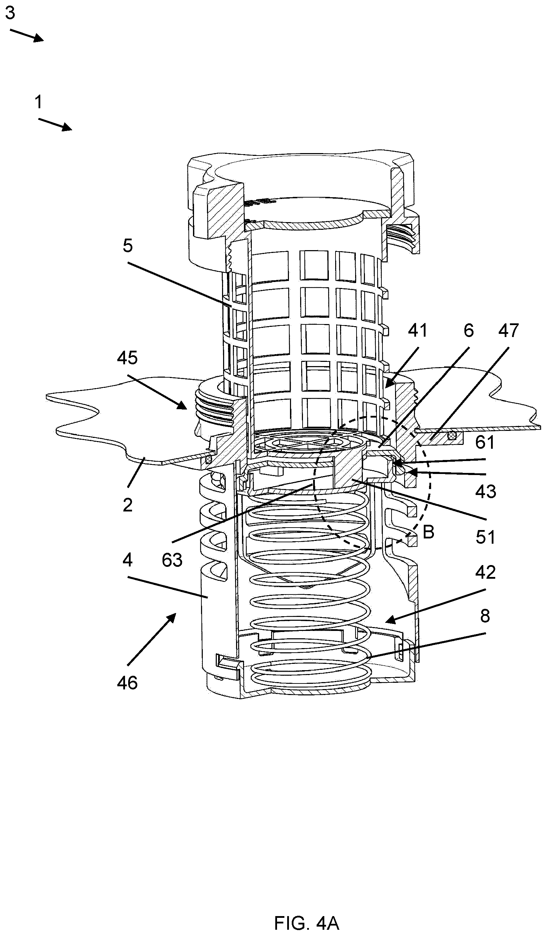

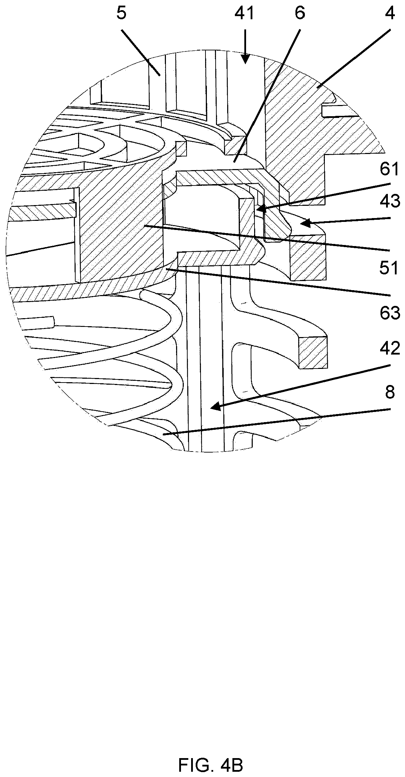

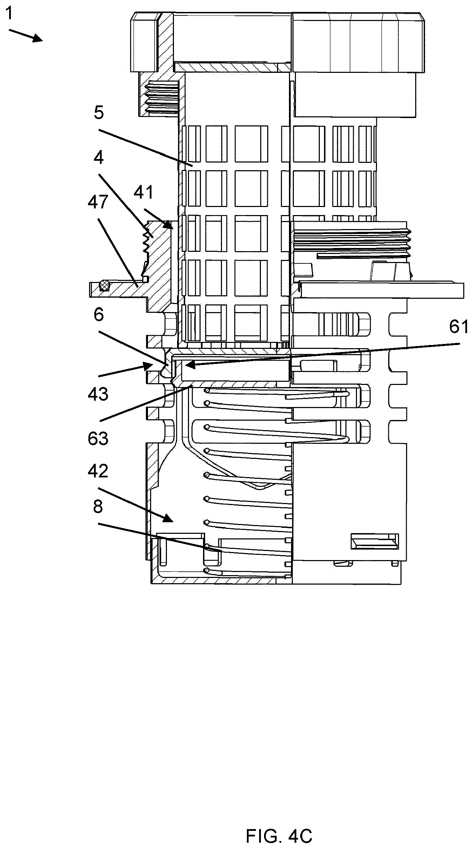

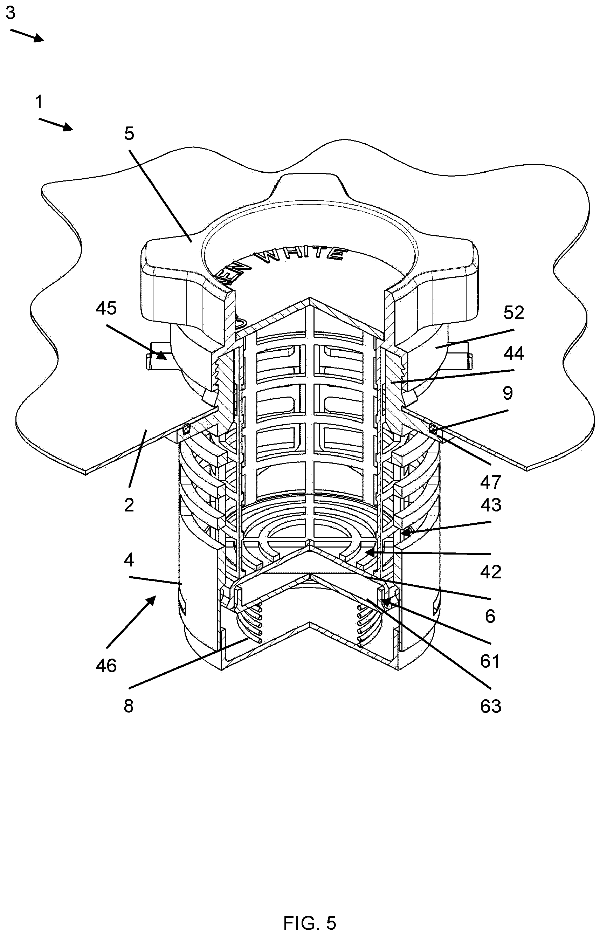

FIG. 4A shows a perspective view of the electric vehicle battery 3, in which the cartridge 5 is starting to be installed in the dryer housing 4 of the battery air dryer 1 of FIG. 2. FIG. 4B shows a zoomed-in perspective view of a region B of the battery air dryer 1 of FIG. 4A. FIG. 4C shows a side view of the battery air dryer 1 of FIG. 4A. FIG. 5 shows a perspective view of the electric vehicle battery 3, in which the cartridge 5 is installed in the dryer housing 4 of the battery air dryer 1 of FIG. 2.

Referring to FIGS. 4A, 4B, 4C, and 5, the seal cap 6 is configured to allow a gas exchange between the open interior 42 of the dryer housing 4 and the environment in a second state in which the seal cap 6 is located remote from the installation opening 41 of the dryer housing 4. The seal cap 6 is only transferable from the first state to the second state when the second component 61 of the keying device is matchingly coupled to the first component 51 of the keying device, e.g., when the one or more keys 51 is fully inserted into the one or more slots 62. In detail, the lock ring 63 of the second component 61 is configured to unlock the seal cap 6 from the one of the recesses 43 in the second state. The one or more keys 51 are configured to apply a force to a surface of the lock ring 63 and the end or the bottom surface of the cartridge 5 is configured to apply a force to a surface of the seal cap 6, so that the lock ring 63 compresses the spring 8 and the seal cap 6 is in the second state, when the cartridge 5 is installed in the dryer housing 4. Therefore, only the correct cartridge 5 is advantageously inserted into and installed in the dryer housing 4.

Referring to FIG. 5, the fixation element 52 of the cartridge 5 is fixed to the fixation portion 44 of the dryer housing 4 to install the cartridge 5 in the dryer housing 4, by rotating the threading of the fixation element 52 onto that of the fixation portion 44. The seal cap 6, the lock ring 63, and the spring 8 are rotatable in the open interior 42 of the dryer housing 4 as the fixation element 52 is being fixed to the fixation portion 44. The seal cap 6, the lock ring 63, and the spring 8 are also disposed below the recesses 43 when the fixation element 52 is fixed to the fixation portion 44 and the cartridge 5 is installed in the dryer housing 4.

It is obvious for the person skilled in the art that modifications are possible in all embodiments. For example, each of the fixation element 52 of the cartridge 5 and the fixation portion 44 of the dryer housing 4 may include a bayonet connection instead of threading. In another example, plastic parts may be replaced with metal parts, and vice versa.

### Reference Numbers

- 1: battery air dryer
- 2: battery housing
- 3: electric vehicle battery
- 4: dryer housing
- 5: cartridge
- 6: seal cap
- 7: cover
- 8: spring
- 9: O-ring
- 10: transparent lid
- 25: electric vehicle
- 41: installation opening
- 42: open interior
- 43: recess
- 44: fixation portion
- 45: first portion
- 46: second portion
- 47: extension portion
- 51: first component of keying device
- 52: fixation element
- 61: second component of keying device
- 62: slot
- 63: lock ring

## Claims

1. A battery air dryer (1) for drying air within a battery housing (2) of an electric vehicle battery (3), the battery air dryer (1) comprising:
a dryer housing (4) couplable to the battery housing (2), and comprising an installation opening (41) and an open interior (42);
a cartridge (5) removably insertable through the installation opening (41) into the open interior (42), and comprising a desiccant material configured to dry the air within the battery housing (2), the cartridge (5) further comprising a first component (51) of a keying device; and
a seal cap (6) axially moveably disposed in the open interior (42), and configured to:
be in a first state in which the seal cap (6) is located adjacent to the installation opening (41); and
allow a gas exchange between the open interior (42) and an environment in a second state in which the seal cap (6) is located remote from the installation opening (41),
wherein the seal cap (6) comprises a second component (61) of the keying device, the second component (61) being configured to lock the seal cap (6) in the first state, and
the seal cap (6) is only transferable from the first state to the second state when the second component (61) is matchingly coupled to the first component (51).

2. The battery air dryer (1) of claim 1, wherein the first component (51) of the keying device that is comprised in the cartridge (5) comprises one or more keys (51) extending in an axial direction from an end of the cartridge (5), and
the second component (61) of the keying device that is comprised in the seal cap (6) comprises one or more slots (62) respectively into which the one or more keys (51) are removably insertable.

3. The battery air dryer (1) of claim 2, wherein the one or more keys (51) comprises a plurality of keys respectively having different shapes,
the one or more slots (62) comprises a plurality of slots respectively having different shapes, and
the different shapes of the plurality of keys respectively fit into only the different shapes of the plurality of slots.

4. The battery air dryer (1) of any of claims 1 to 3, further comprising a cover (7) disposed on an end of the dryer housing (4) that is opposite to the installation opening (41) comprised in the dryer housing (4),
wherein the second component (61) of the keying device that is comprised in the seal cap (6) further comprises a lock ring (63) interposed between the cover (7) and the seal cap (6), the lock ring (63) being axially moveably disposed in the open interior (42) comprised in the dryer housing (4),
the dryer housing (4) further comprises one or more recesses (43), and
the lock ring (63) is configured to:
lock the seal cap (6) to the one or more recesses (43) in the first state in which the seal cap (6) is located adjacent to the installation opening (41); and
unlock the seal cap (6) from the one or more recesses (43) in the second state in which the seal cap (6) is located remote from the installation opening (41).

5. The battery air dryer (1) of claim 4, further comprising a spring (8) interposed between the cover (7) and the lock ring (63), and configured to:
apply a force to the seal cap (6) so that the seal cap (6) is in the first state in which the seal cap (6) is located adjacent to the installation opening (41), when the cartridge (5) is uninstalled in the dryer housing (4); and
compress so that the seal cap (6) is in the second state in which the seal cap (6) is located remote from the installation opening (41), when the cartridge (5) is installed in the dryer housing (4).

6. The battery air dryer (1) of claim 4, wherein the cartridge (5) further comprises a fixation element (52) disposed adjacent to an end of the cartridge (5), and
the dryer housing (4) further comprises a fixation portion (44) removably fixable to the fixation element (52).

7. The battery air dryer (1) of claim 6, wherein the seal cap (6), the lock ring (63), and the spring (8) are rotatable in the open interior (42) comprised in the dryer housing (4) as the fixation element (52) comprised in the cartridge (5) is being fixed to the fixation portion (44) comprised in the dryer housing (4).

8. The battery air dryer (1) of claim 6, wherein a first portion (45) of the dryer housing (4) is disposed above a surface of the battery housing (2), the first portion (45) comprising the fixation portion (44), and
a second portion (46) of the dryer housing (4) is disposed below the surface of the battery housing (2).

9. The battery air dryer (1) of any one of claims 1 to 8, further comprising an O-ring (9) interposed between the battery housing (2) and an extension portion (47) extending from each of side surfaces of the dryer housing (4), the O-ring (9) being configured to seal an interface between the battery housing (2) and the extension portion (47).

10. The battery air dryer (1) of any one of claims 1 to 9, further comprising a transparent lid (10) disposed on an end of the cartridge (5).

11. The battery air dryer (1) of any one of claims 1 to 10, wherein the seal cap (6) is further configured to seal the open interior (42) against the environment in the first state in which the seal cap (6) is located adjacent to the installation opening (41).

12. An electric vehicle battery (3) comprising:
the battery housing (2); and
the battery air dryer (1) of any one of claims 1 to 11.

13. A cartridge (5) for use in a battery air dryer (1) within a battery housing (2) of an electric vehicle battery (3), the cartridge (5) comprising:
a desiccant material configured to dry the air within the battery housing (2); and
a first component (51) of a keying device,
wherein the cartridge (5) is removably insertable through an installation opening (41) into an open interior (42) comprised in a dryer housing (4) couplable to the battery housing (2),
the battery air dryer (1) comprises a seal cap (6) axially moveably disposed in the open interior (42), and configured to:
be in a first state in which the seal cap (6) is located adjacent to the installation opening (41); and
allow a gas exchange between the open interior (42) and the environment in a second state in which the seal cap (6) is located remote from the installation opening (41),
the seal cap (6) comprises a second component (61) of the keying device, the second component (61) being configured to lock the seal cap (6) in the first state, and
the seal cap (6) is only transferable from the first state to the second state when the second component (61) is matchingly coupled to the first component (51).
